# EUROPÄISCHE PATENTSCHRIFT

(11) **EP 0 825 199 B1**
(45) Veröffentlichungstag und Bekanntmachung des Hinweises auf die Patenterteilung: **06.03.2002**
(21) Anmeldenummer: 97113275.8
(22) Anmeldetag: 01.08.1997
(51) Int. Cl.: C08B 11/08, C08B 11/20

(54) **Verfahren zur Herstellung von wasserlöslichen Celluloseethern unter Rückgewinnung von Natriumhydroxid**
Process for preparing water-soluble cellulose ethers with recovery of sodium hydroxide
Procédé pour la préparation d'éthers de la cellulose solubles dans l'eau avec récupération d'hydroxyde de sodium

(30) Priorität: 22.08.1996 DE 19633826
(43) Veröffentlichungstag der Anmeldung: 25.02.1998
(73) Patentinhaber: Clariant GmbH, 65929 Frankfurt am Main (DE)
(72) Erfinder: Dönges, Reinhard, Dr., 65812 Bad Soden (DE); Ehrler, Rudolf, Dr., 65439 Flörsheim (DE)

(56) Entgegenhaltungen:
- DE-A- 1 668 347
- DE-A- 3 216 786
- DE-B- 1 177 127
- PATENT ABSTRACTS OF JAPAN vol. 18, no. 558 (C-1264) & JP 06 199902 A (SUMITOMO SEIKA), 19.Juli 1994, & DATABASE WPI Week 9433 Derwent Publications Ltd., London, GB; AN 269458

## Beschreibung

Die vorliegende Erfindung betrifft ein Verfahren zur Herstellung wasserlöslicher Hydroxyalkylcellulose mittels der Reaktionsschritte Alkalisierung von Cellulose mit Natronlauge, Umsetzen der Alkalicellulose mit einem oder mehreren Alkylenoxiden, Abtrennen der flüssigen Phase, Auswaschen der rohen Hydroxyalkylcellulose mit einem Lösemittel für Natronlauge und anschließende Rückgewinnung von wäßriger Natronlauge aus den flüssigen Phasen.

Wasserlösliche Derivate der Cellulose bewirken beim Lösen in wäßrigen Systemen eine Erhöhung der Viskosität. Günstige toxikologische Eigenschaften und die Herkunft der Cellulose aus dem Pool der nachwachsenden Rohstoffe haben diese Substanzklasse zu einem ökologisch und ökonomisch wichtigen Konsistenzgeber zum Beispiel in der Erdöl-, Bau-, Farben-, Kosmetik- und Nahrungsmittelindustrie gemacht.

Zur Herstellung wasserlöslicher Hydroxyalkylcellulosen wird üblicherweise Cellulose in einem wäßrigen Lösemittel suspendiert, mit Alkali, vorzugsweise Natronlauge, alkalisiert und mit dem entsprechenden Alkylenoxid zur Reaktion gebracht. Nach beendeter Umsetzung wird die Natronlauge mit einer Mineralsäure oder Essigsäure neutralisiert. Das entstandene Salz wird zusammen mit den Hydrolyseprodukten des Alkylenoxids, Glykole und Polyglykole mit einem geeigneten wäßrigen Lösemittel aus dem Rohprodukt durch mehrmaliges Auswaschen entfernt. Die Glykole werden zusammen mit den Salzen üblicherweise einer Abwasserreinigungsanlage zugeführt.

Prinzipiell ist nur eine geringe Alkalimenge für die Veretherung von Cellulosen mit Alkylenoxiden erforderlich, da Veretherungen mit Alkylenoxiden, im Gegensatz zur Williamsonschen Ethersynthese, ohne Alkaliverbrauch ablaufen, das Alkali also nur als Katalysator wirkt. Der Aufschluß der Cellulose erfordert jedoch etwa 1,0 bis 1,4 mol Alkali pro mol Anhydroglukoseeinheiten für eine gleichmäßige Veretherung. Dieses Alkali fällt nach der Neutralisation zwangsläufig als unerwünschte Salzfracht an, die entfernt werden muß.

Bei der Neutralisation weist der Einsatz von Mineralsäuren mehrere Nachteile auf. Die Salze lassen sich mit wasserhaltigen Lösemitteln nur schwer auswaschen. Erhöht man die Wasserkonzentration in den Waschmedien, verbessert sich zwar die Effektivität der Auswaschung, aber in gleichem Maße wird auch die Hydroxyalkylcellulose solubilisiert und mit ausgewaschen. Gut bewährt hat sich die in DE-C 12 12 058 vorgeschlagene Kombination aus Salpetersäure bei der Neutralisation und wasserhaltigem Aceton bei der Auswaschung des Celluloseethers, da das Natriumnitrat eine ausreichende Löslichkeit in diesem Medium besitzt, während Hydroxyalkylcellulosen bis zu hohen Substitutionsgraden darin praktisch unlöslich sind. Generell müssen jedoch bei diesem Verfahren ca. 1,0 bis 1,4 mol Natriumnitrat mol Anhydroglucoseeinheiten entsorgt werden.

Der Einsatz von Essigsäure oder anderen organischen Säuren hat zwar den Vorteil der besseren Auswaschbarkeit, erhöht jedoch die organische Kohlenstoffbelastung des Abwassers, ausgedrückt als CSB (Chemischer Sauerstoffbedarf), und belastet somit zusätzlich die Abwasserreinigungsanlage.

In DE-A 16 68 347 wird daher vorgeschlagen, vor der Neutralisation die Natronlauge mit wäßrigem Methanol oder Methanol-haltigen Lösemitteln weitgehend aus dem Celluloseether zu entfernen, um diese danach erst mit Mineralsäuren zu neutralisieren. Nach Abdestillieren der Lösemittel können die Salze ohne Erhöhung des CSB entsorgt werden. Die Neutralisation von restlichem Alkali im Celluloseether kann dagegen mit einer beliebigen Säure erfolgen. Das Restsalz kann im Celluloseether verbleiben, da kleinere Mengen an Salz im Produkt toleriert werden.

In DE-A 11 77 127 wird das Problem der Auswaschung dadurch gelöst, daß nach Alkalisierung auf einen geringen molaren Substitutionsgrad (MS) von 0,05 bis 0,8 Hydroxyalkyl-Einheiten teilverethert wird. Aus dieser, wegen ihres geringen Substitutionsgrades wasserunlöslichen Hydroxyalkylcellulose, kann entweder die Natronlauge direkt oder nach Neutralisation das entsprechende Salz leicht ausgewaschen werden. In der zweiten Veretherungsstufe wird in Gegenwart des im Celluloseether verbliebenem restlichen Natriumhydroxids und gegebenenfalls Zugabe einer geringen Menge Alkali weiter bis zum angestrebten Substitutionsgrad (MS) hydroxyalkyliert. Nach der Neutralisation verbleibt das Restsalz im Celluloseether.

In DE-A 32 16 786 wird beschrieben, daß nach dem Aufschluß der Cellulose mit >1,2 mol Alkali pro mol Anhydroglukoseeinheiten die Alkalicellulose mit einem Lösemittelgemisch bis auf 0,3 - 0,8 mol Alkali pro Mol Anhydroglukoseeinheiten ausgewaschen und nachfolgend mit einem Alkylenoxid verethert wird. Die Vorteile dieses Verfahrens sind, daß aufgrund der geringeren Alkalikonzentration die Bildung von Nebenreaktionen zurückgedrängt wird, eine geringere Menge an Neutralisationsmittel benötigt wird und weniger Salz ausgewaschen werden muß.

In JP-A-6199902 wird die Herstellung einer Hydroxyethylcellulose aus Cellulose, Alkali und Ethylenoxid in einem schwach wasserlöslichen, organischen Lösungsmittel beschrieben. Die Extraktion von Alkali und Nebenproduken erfolgt hier mit einer Mischung des genannten schwach wasserlöslichen Lösungsmittels mit Methanol und Wasser. Über die Rückgewinnung und Reinigung des extrahierten Alkali werden jedoch keine Angaben gemacht.

In all diesen Dokumenten wird aufgezeigt, wie Natronlauge aus einer rohen Hydroxyalkylcellulose ausgewaschen werden kann. In DE-A 32 16 786 wird außerdem erwähnt, daß die Natronlauge wieder eingesetzt werden kann. Wie diese jedoch von Glykolen und anderen Beiprodukten gereinigt werden kann, ist nicht offengelegt. Eine Glykolverunreinigung der Natronlauge würde jedoch den erneuten Einsatz in einer Hydoxyalkylierung erheblich stören, da Glykole unter Verbrauch von Alkylenoxid Polyglykole bilden. Dies führt zu einer Ausbeuteverminderung und Erhöhung der Abwasserbelastung.

Die Aufgabe der vorliegenden Erfindung war daher, ein einfaches und wirtschaftliches Verfahren zur Herstellung von Hydroxyalkylgruppen enthaltenden Cellulosethern zur Verfügung zu stellen unter Rückgewinnung von Natronlauge aus den Hydroxyalkylierungsschritten in einer Qualität, die einen erneuten Einsatz im Hydroxyalkylierungsprozeß ermöglicht.

Die Aufgabe wurde gelöst, indem die Hydroxyalkylierung der Cellulose in einem wasserhaltigen organischen Suspensionsmittel durchgeführt wird, nach beendeter Umsetzung der Reaktionsansatz ohne Neutralisation von dem Suspensionsmittel abgetrennt wird, der rohe Celluloseether mit einem Lösemittelgemisch bis zur gewünschten Restalkalimenge ausgewaschen wird, das Lösemittelgemisch destilliert wird und der Destillationsrückstand des Lösemittelgemisches mit dem vorher abgetrennten Suspensionsmittel vereinigt wird, wobei es zu einer Phasentrennung kommt mit einer unteren Phase aus nahezu reiner, konzentrierter Natronlauge, die wiederum für den Einsatz bei der Hydroxyalkylierung von Cellulose geeignet ist.

Gegenstand der vorliegenden Erfindung ist daher ein Verfahren zur Herstellung von wasserlöslichen Hydroxylalkylgruppen enthaltenden Celluloseethern, dadurch gekennzeichnet, daß Zellstoff mit Alkylenoxid in einem wasserhaltigen organischen Suspensionsmittel in Gegenwart von mindestens 1,0 mol Natriumhydroxid pro mol Anhydroglukoseeinheiten verethert wird, das wasserhaltige, organische Suspensionsmittel nach beendeter Veretherungsreaktion abgetrennt wird, der rohe Celluloseether mit einem geeigneten Lösemittelgemisch extrahiert wird, aus dem Lösemittelgemisch nach der Extraktion die tiefer siedenden organischen Bestandteile abdestilliert werden, das abgetrennte wasserhaltige organische Suspensionsmitel dem Destillationsrückstand des Lösemittelgemisches zugesetzt wird unter Ausbildung eines mehrphasigen Gemisches, die untere Phase des mehrphasigen Gemisches separiert wird und das in der unteren Phase enthaltene Natriumhydroxid wieder eingesetzt wird und gegebenenfalls das Destillat des Lösemittelgemisches als Lösemittelgemisch zur Extraktion des rohen Celluloseethers wieder eingesetzt wird.

Das erfindungsgemäße Verfahren ist anwendbar bei allen Verfahren zur Herstellung von Celluloseethern, bei denen zumindest ein Teil des eingesetzten Natriumhydroxids nicht verbraucht wird, sondern nur eine katalytische Funktion besitzt. Kein Natriumhydroxid verbraucht wird beispielsweise bei der Herstellung von Hydroxyethylcellulose aus Ethylenoxid und Zellstoff, Hydroxypropylcellulose aus Propylenoxid und Zellstoff oder bei der Herstellung von Mischethern aus den genannten Celluloseethertypen. Im folgenden werden diese Ether summarisch als Hydroxyalkylcellulosen bezeichnet.

Die Herstellung von Hydroxyalkylcellulose erfolgt nach dem sogenannten Suspensionsverfahren. Dazu wird zunächst der Zellstoff mit Hilfe von vorzugsweise 1,0 bis 1,5 Mol Natronlauge pro mol Anhydroglukoseeinheiten aufgeschlossen. Der so aufgeschlossene Zellstoff wird mit vorzugsweise 2,0 bis 6,0 mol Alkylenoxid pro mol Anhydroglukoseeinheiten bei Temperaturen von vorzugsweise 40 bis 120 °C zur Reaktion gebracht. Der Celluloseether liegt während der gesamten Umsetzung in fester Form in einem Suspensionsmittel vor. Bevorzugte Suspensionsmittel sind einwertige Alkohole mit 2 bis 4 Kohlenstoff-atomen sowie deren Mischungen mit Ketonen mit 3 bis 5 Kohlenstoffatomen. Insbesondere geeignet sind Isopropanol und t-Butanol sowie deren Gemische. Das Gewichtsverhältnis von eingesetztem Suspensionsmittel zu Zellstoff beträgt vorzugsweise 3:1 bis 20:1. Weiterhin enthält die Suspension insbesondere 0,5 bis 3,0 Gewichtsteile Wasser pro Gewichtsteil eingesetzten Zellstoffs.

Die weitere Beschreibung erläutert die erfindungsgemäße Aufarbeitung des Celluloseethers, die so durchgeführt wird, daß der überwiegende Teil der Natronlauge zurückgewonnen wird. Die gemäß dem Stand der Technik unmittelbar nach erfolgter Veretherung der Cellulose übliche Neutralisation der gesamten überschüssigen Natronlauge mit einer Mineralsäure und/oder organischen Säure entfällt gemäß dem erfindungsgemäßen Verfahren.

Zunächst wird die Alkali-haltige Celluloseethersuspension unter Inertgasatmosphäre in einen Feststoff- und einen Suspensionsmittelanteil zerlegt. Geeignete Aggregate hierzu sind Filterapparate oder Zentrifugen. Die Suspensionsmittelphase besteht hauptsächlich aus dem eingesetzten Suspensionsmittel und enthält zusätzlich als Nebenprodukte aus der Veretherungsreaktion Glykole und etwas Natronlauge. Der überwiegende Teil der Natronlauge befindet sich jedoch im Feststoffanteil.

Aus dem abgetrennten Feststoffanteil werden die Nebenprodukte extrahiert. Als Nebenprodukte fallen Glykole, Hemicellulosen und Natronlauge an. Geeignete Lösemittel für die Extraktion sind beispielsweise die oben genannten Suspensionsmittel, beispielsweise Alkohole mit 2 bis 4 Kohlenstoff-Atomen sowie Aceton, Methanol oder Ethanol, vorzugsweise Mischungen, die Methanol und/oder Ethanol enthalten, insbesondere im Gemisch mit Wasser.

Beim Einsatz von Methanol-haltigen Extraktionsmitteln sollte der Gewichtsanteil an Methanol im Lösemittelgemisch vorzugsweise mindestens 20 Gew.-% betragen. Bei geringeren Konzentrationen wird das Natriumhydroxid nicht mehr in ausreichendem Maße aus dem Feststoff herausgelöst. Der Anteil an Methanol sollte vorzugsweise 80 Gew.-% nicht überschreiten. Höhere Konzentrationen bewirken ein unerwünschtes Anlösen des Celluloseethers. Der Wasseranteil des Extraktionsmitels sollte zwischen 0 und 10 Gew.-% liegen. Höhere Konzentrationen bewirken ein Aufquellen des Celluloseethers. Insbesondere werden Methanol-Konzentrationen von 20 bis 50 Gew.-% und Wasser-Konzentrationen von 2 bis 7 Gew.-% gewählt. Der Rest des Extraktionsmittels besteht zweckmäßigerweise aus dem im Reaktionsteil eingesetzten Suspensionsmittel.

Beim Einsatz von Ethanol-haltigen Extraktionsmitteln sollte der Gewichtsanteil an Ethanol im Lösemittelgemisch vorzugsweise mindestens 30 Gew.-% betragen. Bei geringeren Konzentrationen wird das Natriumhydroxid nicht mehr in ausreichendem Maße aus dem Feststoff herausgelöst. Der Anteil an Ethanol sollte vorzugsweise 90 Gew.-% nicht überschreiten. Der Wasseranteil des Extraktionsmittels sollte vorzugsweise zwischen 0 und 10 Gew.-% liegen. Insbesondere werden Ethanol-Konzentrationen von 40 bis 80 Gew.-% und Wasserkonzentrationen von 2 bis 7 Gew.-% gewählt. Der Rest des Extraktionsmittels besteht zweckmäßigerweise aus dem im Reaktionsteil eingesetzten Suspensionsmittel.

Die Extraktion kann durch wiederholtes Aufschlämmen des rohen Celluloseethers in dem Extraktionsmittel erfolgen, wobei vorzugsweise ein Gewichtsverhältnis von Feststoff zu Extraktionsmittel von 1 : 5 bis 1: 20 eingehalten wird. Wahlweise kann auch eine Extraktion am Festbett durch Eluieren mit dem Extraktionsmittel erfolgen. Der Fortschritt der Extraktion kann durch Messung der Leitfähigkeit ermittelt werden. Der Bedarf an Extraktionsmittel beträgt vorzugsweise 12 bis 25 Gewichtsteile Lösemittel pro Gewichtsteil reinem Celluloseether. Nach der Extraktion wird der Celluloseether nochmals in dem Extraktionsmedium aufgeschlämmt, und das darin verbliebene Alkali wird in üblicher Weise mit einer Mineralsäure oder Essigsäure neutralisiert. Geeignete Mineralsäuren sind beispielsweise Salzsäure, Salpetersäure, Schwefelsäure, Phosphorsäure oder Kohlendioxid. Nach erneutem Absaugen oder Zentrifugieren wird das Feuchtmaterial dem üblichen Trocknungsprozeß zugeführt. Ein nach diesem Verfahren erhaltener Celluloseether enthält im allgemeinen weniger als 12 Gew.-% an Natriumsalzen.

Die bevorzugten Methanol oder Ethanol enthaltenden Lösemittelgemische aus der Extraktion werden nun so aufgearbeitet, daß die darin enthaltene Natronlauge wieder im Folgeansatz verwendet werden kann. Die leichter flüchtigen organischen Lösemittelanteile werden durch einfache Destillation, beispielsweise mittels eines Rotationsverdampfers entfernt. Das Kondensat kann nach Analyse und entsprechender Aufstärkung wieder als Lösemittelgemisch für die Extraktion eingesetzt werden. Der wäßrige Destillationsrückstand enthält neben der Natronlauge noch Glykole und Hemicellulosederivate als Nebenprodukte aus der Herstellung des Celluloseethers. Der Destillationsrückstand wird mit der Suspensionsmittelphase vereinigt und eine Temperatur von 20 - 70 °C, vorzugsweise 40 - 60 °C eingestellt. Es kommt zu einer Phasentrennung, wobei die untere Phase aus nahezu reiner wäßriger Natronlauge in einer Konzentration von 15 bis 30 Gew.-% besteht. Diese kann ohne weitere Aufarbeitung gegebenenfalls nach Aufstärkung mit Natriumhydroxid wieder eingesetzt werden. Auf diese Weise können 50 bis 80 % der eingesetzten Natronlauge wieder in den Prozeß zurückgeführt werden.

Gegebenenfalls vorhandene Zwischenphasen werden zusammen mit der oberen, organischen Phase, die die Glykole enthält, abgetrennt. Die organische Phase wird destilliert. Das Kondensat kann wiederum als Suspensionsmittel eingesetzt werden. Der Destillationsrückstand besteht hauptsächlich aus Glykolen und geringen Mengen an Hemicellulosen. Diese können in der üblichen Weise einer Abwasserreinigungsanlage zugeführt werden oder anderweitig, zum Beispiel durch Verbrennung, entsorgt werden. Falls erforderlich können aus dem Destillationsrückstand beispielsweise Ethylenglykol und Alkylmonoglykole destillativ gewonnen werden.

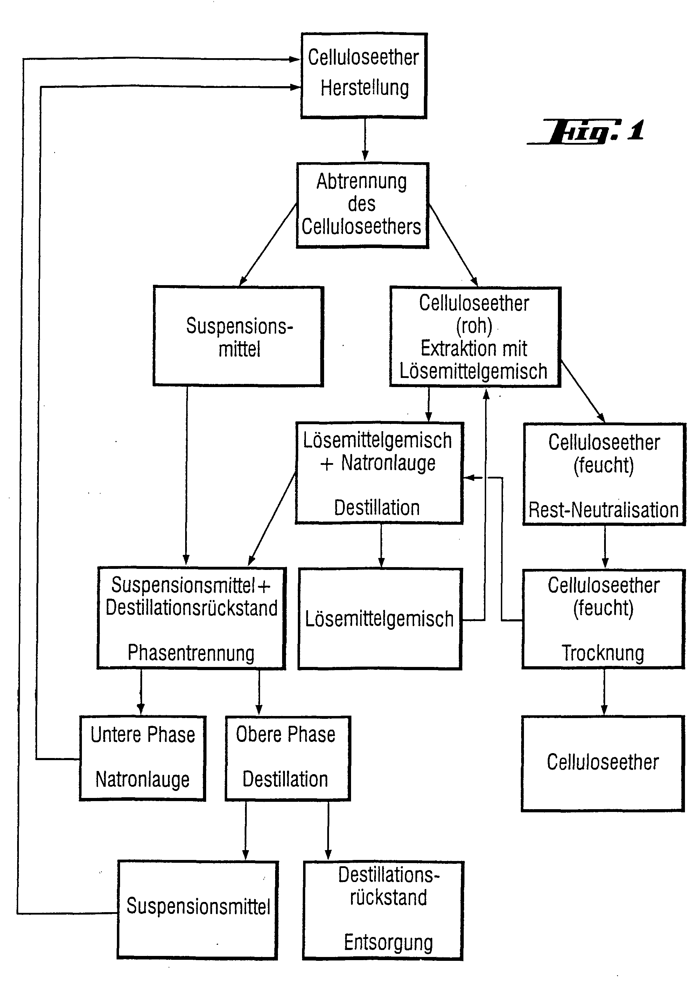

Abbildung 1 zeigt schematisch den Ablauf des beschriebenen Verfahrens von der Herstellung der Celluloseether bis zur Rückgewinnung der Lösemittel und der Natronlauge.

### BEISPIELE

Die aus dem erfindungsgemäßen Verfahren erhaltenen Produkte wurden wie folgt charakterisiert: Die Viskosität einer 2 Gew.-%igen wäßrigen Lösung wurde an einem Höppler-Viskosimeter bestimmt. Der in Wasser unlösliche Anteil des Celluloseethers wurde durch mehrmaliges Lösen und Abdekantieren und anschließende Trocknung des Rückstandes bestimmt. Der molare Substitutionsgrad (MS) wurde durch Zersetzen einer Probe des Celluloseethers mit Iodwasserstoff und anschließender gaschromatographischer Bestimmung der Alkyliodide bestimmt (Zeisel-Methode).

Die in den folgenden Beispielen angeführten Teile und Prozente beziehen sich auf das Gewicht, soweit nicht anders vermerkt.

### Beispiel 1

### Herstellung von Hydroxyethylcellulose (HEC)

In einem 21 Glasreaktor wurden 85,0 g Linterszellstoff in 800g t-Butanol/Methanol/Wasser im Gewichtsverhältnis 87/1/12 suspendiert. Es wurde dreimal inertisiert, dann 56 g 50 %ige Natronlauge zugegeben. Es wurde 45 min bei Raumtemperatur gerührt, dann ließ man 125 ml Ethylenoxid zulaufen, heizte 1 h auf 40 °C und weitere 1,5 h auf 80 °C. Anschließend wurde auf <30 °C abgekühlt.

### Abtrennen der Suspensionsmittelphase

Nach Abkühlen des Reaktionsansatzes wurde dieser ohne Neutralisation auf eine mit Stickstoff überlagerte Glasfilternutsche überführt. Der Ansatz wurde abgesaugt. Die Suspensionsmittelphase bestand hauptsächlich aus t-Butanol, Glykolen und wenig Natronlauge. Die Suspensionsmittelphase wurde in einem separaten Gefäß aufgefangen.

### Auswaschung der Roh-HEC

Der Filterkuchen wurde in 1 1 eines Lösemittelgemisches von t-Butanol/Methanol/ Wasser 65/30/5 suspendiert und erneut auf die Nutsche gebracht. Der Filterkuchen wurde weiter mit demselben Lösemittelgemisch eluiert. Anfangs betrug die Leitfähigkeit des Eluats ca. 1300 µS und stieg dann bis auf 3500 µS an. Nach einem Durchsatz von 2440 g Lösemittelgemisch betrug die Leitfähigkeit des letzten Eluats 780 µS. Insgesamt wurden ca. 16 kg Lösemittel pro kg HEC Lösemittel verbraucht.

### Neutralisation

Die HEC wurde nochmals im gleichen Lösemittelgemisch aufgeschlämmt und durch Zugabe von konzentrierter Salzsäure in die Suspension neutralisiert. Es wurde scharf abgesaugt, das Filtrat wurde zusammen mit dem Extraktionsmittel aufgearbeitet.

### Trocknung

Das Feuchtprodukt (1103 g), 16,5 % Feststoff, 5,9 % Wasser) wurde bei 75 °C getrocknet. Man erhielt 170 g einer HEC mit einem Trockengehalt von 93,4 % und mit einem Anteil von 5,6 % Natriumchlorid, bezogen auf den Feststoff. Die Viskosität betrug 60.000 mPas. Der molare Substitutionsgrad (MS) betrug 3,1.

### Destillation des Eluats

Das Lösemittelgemisch aus der Extraktion wurde einer einfachen Destillation am Rotationsverdampfer (200 mbar, 65 °C) unterworfen. Das Destillat bestand aus 60,4 % t-Butanol, 34,0 % Methanol und 5,6 % Wasser und konnte somit nach Aufstärkung mit t-Butanol wieder für die Extraktion eingesetzt werden.

### Abtrennen der Natronlauge

Der wäßrige Destillationsrückstand (70 g) wurde mit der angetrennten Suspensionsphase aus dem Veretherungsprozeß vereinigt, auf 60 °C erwärmt und in einen Abscheider überführt. Es bildeten sich zwei definierte Phasen aus. Zwischen den beiden Phase bildete sich eine weitere Schicht in Form einer Emulsion aus Hemicellulosen, Glykolen gelöster HEC und Natronlauge aus. Die untere Phase wurde abgetrennt. Man erhielt so 58 g 25,6 %ige Natronlauge. Diese enthielt noch 5,1 % Glykole, 1 % Methanol und 1,3 % t-Butanol. Die Zwischenschicht wurde zusammen mit der oberen, organischen Phase destilliert . Die abgetrennte Natronlauge eignete sich ohne weitere Aufarbeitung für den erneuten Einsatz. In diesem Beispiel wurden 53 % der eingesetzten Natronlauge zurückgeführt.

### Destillation des Suspensionsmittels

Die abgetrennte obere Phase wurde am Rotationsverdampfer destilliert (200 mbar, 60 °C). Das Destillat (557 g) bestand aus 90,8 % t-Butanol, 5,4 % Wasser und 1 % Methanol (Rest: t-Butylglykol, Methylglykol) und war somit nach Aufstockung mit t-Butanol wieder als Suspensionsmittel verwendbar.

### Beispiel 2

### Einsatz von zurückgewonnener Natronlauge.

Die Durchführung dieses Versuchs erfolgte wie unter Beispiel 1 beschrieben. Als Natronlauge wurden jedoch 112 g 25%ige Natronlauge, die durch Recycling aus vorangegangenen Versuchen zurückgewonnen worden waren, eingesetzt. Der molare Substitutionsgrad (MS) des Produkts lag bei 3,0, die Viskosität einer 2 %igen wäßrigen Lösung betrug 55.000 mPas.

### Beispiel 3

### Auswaschung durch Suspendieren im Extraktionsmittel.

Die Durchführung dieses Versuchs erfolgte wie unter Beispiel 1 beschrieben.
Die Extraktion des Rohproduktes erfolgte jedoch durch 4-maliges Suspendieren des Rohproduktes in jeweils 780 g des Lösemittelgemisches und Absaugen an einer Nutsche. Die Leitfähigkeit des letzten Eluats betrug 580 µS. Der Lösemittelverbrauch lag bei ca. 20 kg / kg HEC.
Bei diesem Versuch konnten 65 % der Natronlauge zurückgewonnen werden.

### Beispiel 4

### Herstellung von Hydroxyethylcellulose (HEC)

In einem Glasreaktor wurden 85,0 g Fichtenzellstoff in 800 g t-Butanol/Ethanol/Wasser im Gewichtsverhältnis 85/5/10 suspendiert. Es wurde dreimal inertisiert und 56 g 50 %ige Natronlauge zugegeben. Es wurde 45 min bei Raumtemperatur gerührt, dann 110 ml Ethylenoxid zugegeben, 1 h auf 40 °C und weitere 1,5 h auf 80 °C aufgeheizt. Anschließend wurde auf <30 °C abgekühlt.

### Abtrennen der Suspensionsmittelphase

Nach Abkühlen des Reaktionsansatzes wurde an einer Filternutsche abgesaugt. Man erhielt 700 g Suspensionsmittelphase.

### Auswaschung der Roh-HEC

Der Filterkuchen wurde in 1 1 eines Lösemittelgemisches von t-Butanol/Ethanol/ Wasser im Gewichtsverhältnis 20/75/5 suspendiert und erneut auf die Nutsche gebracht. Der Filterkuchen wurde weiter mit demselben Lösemittelgemisch eluiert. Anfangs betrug die Leitfähigkeit des Eluats ca. 1200 µS und stieg dann bis auf 3200 µS an. Nach einem Durchsatz von 2460 g Waschmedium wurde eine Leitfähigkeit des letzten Eluats von 390 µS erhalten. Der Lösemittelverbrauch betrug insgesamt ca. 16 kg / kg HEC.

### Neutralisation

Die HEC wurde nochmals im gleichen Lösemittelgemisch aufgeschlämmt und durch Zugabe von Essigsäure neutralisiert. Es wurde scharf abgesaugt, das Filtrat wurde zusammen mit dem Extraktionsmittel aufgearbeitet.

### Trocknung

Das Feuchtprodukt wurde bei 70 °C getrocknet. Man erhielt 172 g einer HEC mit einem Trockengehalt von 97,8 % und einem Anteil von 8,2 % Natriumacetat, bezogen auf den Feststoff. Die Viskosität einer 2 %igen wäßrigen Lösung betrug 180 mPas. Der molare Substitutionsgrad (MS) des Produkts betrug 3,1. Das Produkt war bei Raumtemperatur zu 99,5 % in Wasser löslich.

### Destillation des Eluats

Das Lösemittelgemisch aus der Extraktion wurde am Rotationsverdampfer (200 mbar, 65 °C) destilliert. Das Destillat bestand aus 21,6 % t-Butanol, 72,9 % Ethanol und 5,6 % Wasser und konnte somit nach Aufstärkung mit Ethanol wieder für die Extraktion eingesetzt werden.

### Abtrennen der Natronlauge

Der wäßrige Destillationsrückstand (43 g) wurde mit dem abgetrennten Suspensionsmittel aus dem Veretherungsprozeß vereinigt, auf 60 °C erwärmt und in einen Abscheider überführt. Es bildeten sich zwei Phasen aus. Die untere Phase wurde abgetrennt. Man erhielt so 64 g 23 %ige Natronlauge. Diese enthielt noch 1,6 % Glykole und 0,4 % t-Butanol. Die Zwischenphase wurde zusammen mit der oberen organischen Phase destilliert. Die abgetrennte Natronlauge eignete sich ohne weitere Aufarbeitung für den erneuten Einsatz. In diesem Beispiel wurden 53 % der eingesetzten Natronlauge zurückgeführt.

### Destillation des Suspensionsmittels

Die abgetrennte obere Phase wurde am Rotationsverdampfer destilliert (200 mbar, 60 °C). Das Destillat (620 g) bestand aus 87,9 % t-Butanol, 6,4 % Wasser und 5,7 % Ethanol (Rest: t-Butylglykol, Ethylglykol) und war somit nach Aufstockung mit Ethanol wieder als Suspensionsmittel verwendbar.

### Beispiel 5

### Herstellung von Hydroxyethylcellulose (HEC)

In einem Glasreaktor wurden 85,0 g Fichtenzellstoff in 800 g 85 %igem wäßrigen Isopropanol suspendiert. Es wurde dreimal inertisiert und 56 g 50 %ige Natronlauge zugegeben. Es wurde 45 min bei Raumtemperatur gerührt, dann wurden 153 ml Ethylenoxid zugegeben, 1 h auf 40 °C und weitere 1,5 h auf 80 °C aufgeheizt. Anschließend wurde auf <30 °C abgekühlt.

### Abtrennen der Suspensionsmittelphase

Nach Abkühlen des Reaktionsansatzes wurde an einer Filternutsche abgesaugt. Man erhielt 656 g Suspensionsmittelphase.

### Auswaschung der Roh-HEC

Der Filterkuchen wurde in 1 1 eines Lösemittelgemisches von Isopropanol/Methanol/ Wasser im Gewichtsverhältnis 69/25/6 suspendiert und erneut auf die Nutsche gebracht. Der Filterkuchen wurde weiter mit demselben Lösemittelgemisch eluiert. Anfangs betrug die Leitfähigkeit des Eluats ca. 1480 µS und stieg dann bis auf 3300 µS an. Nach einem Durchsatz von 3280 g Waschmedium wurde eine Leitfähigkeit des letzten Eluats von 540 µS erhalten.

### Neutralisation

Die HEC wurde nochmals im gleichen Lösemittelgemisch aufgeschlämmt und durch Zugabe von 11,6 g Essigsäure neutralisiert. Es wurde scharf abgesaugt. Das Filtrat wurde zusammen mit dem Extraktionsmittel aufgearbeitet.

### Trocknung

Das Feuchtprodukt wurde bei 70 °C getrocknet. Man erhielt 154 g einer Hydroxyethylcellulose mit einem Trockengehalt von 97,8 % und mit einem Anteil von 10,2 % Natriumacetat, bezogen auf den Feststoff. Die Viskosität einer 2 %igen wäßrigen Lösung betrug 73.000 mPas. Der molare Substitutionsgrad (MS) betrug 2,8. Das Produkt war bei Raumtemperatur zu 97 % in Wasser löslich.

### Destillation des Eluats

3688 g des Lösemittelgemisches aus der Extraktion wurden am Rotationsverdampfer (250 mbar, 65 °C) destilliert. Das Destillat (3570 g) bestand zu 70,2 % aus Isopropanol, 22,6 % Methanol und 7,3 % Wasser und konnte wieder für die Extraktion eingesetzt werden.

### Abtrennen der Natronlauge

Der wäßrige Destillationsrückstand (113 g) wurde mit dem abgetrennten Suspensionsmittel aus dem Veretherungsprozeß vereinigt, auf 60 °C erwärmt und in einen Abscheider überführt. Es bildeten sich zwei Phasen aus. Die untere Phase wurde abgetrennt. Man erhielt so 67 g 22 %ige Natronlauge. Diese enthielt noch 1,3 % Glykole und 2,5 % Isopropanol.

Die abgetrennte Natronlauge eignete sich, nach Aufstockung mit reinem Natriumhydroxid ohne weitere Aufarbeitung für den erneuten Einsatz. In diesem Beispiel wurden 57 % der eingesetzten Natronlauge zurückgeführt.

### Destillation des Suspensionsmittels

Die abgetrennte obere Phase wurde am Rotationsverdampfer destilliert (200 mbar, 60 °C). Das Destillat (794 g) entsprach mit 85,8 % Isopropanol, 13,4 % Wasser und 0,8 % Methanol nahezu dem eingesetzten Gemisch und war somit wieder als Suspensionsmittel einsetzbar.

## Patentansprüche

1. Verfahren zur Herstellung von wasserlöslichen Hydroxylalkylgruppen enthaltenden Celluloseethern, **dadurch gekennzeichnet, daß** Zellstoff mit Alkylenoxid in einem wasserhaltigen organischen Suspensionsmittel in Gegenwart von mindestens 1,0 mol Natriumhydroxid pro mol Anhydroglukoseeinheiten verethert wird, das organische, wasserhaltige Suspensionsmittel nach beendeter Veretherungsreaktion abgetrennt wird, der rohe Celluloseether mit einem geeigneten Lösemittelgemisch extrahiert wird, aus dem Lösemittelgemisch nach der Extraktion die tiefer siedenden organischen Bestandteile abdestilliert werden, das abgetrennte wasserhaltige organische Suspensionsmittel dem Destillationsrückstand des Lösemittelgemisches zugesetzt wird unter Ausbildung eines mehrphasigen Gemisches, die untere Phase des mehrphasigen Gemisches separiert wird und das in der unteren Phase enthaltene Natriumhydroxid wieder eingesetzt wird.

2. Verfahren nach Anspruch 1, dadurch gekennzeichet, daß die untere Phase des mehrphasigen Gemisches bei der Herstellung von Hydroxyalkylgruppen enthaltenden Celluloseethern eingesetzt wird.

3. Verfahren nach Anspruch 1, dadurch gekennzeichet, daß das Destillat des Lösemittelgemisches als Lösemittelgemisch zur Extraktion des rohen Celluloseethers eingesetzt wird.

4. Verfahren nach Anspruch 1, dadurch gekennzeichet, daß das Gewichtsverhältnis von eingesetztem Suspensionsmittel zu Zellstoff 3 : 1 bis 20 : 1 beträgt.

5. Verfahren nach Anspruch 1, **dadurch gekennzeichnet, daß** das wasserhaltige organische Suspensionsmittel einwertige Alkohole mit 2 bis 4 Kohlenstoffatomen enthält.

6. Verfahren nach Anspruch 1, **dadurch gekennzeichnet, daß** mindestens eine Komponente des zur Extraktion eingesetzten Lösemittelgemisches auch Bestandteil des Suspensionsmittels ist.

7. Verfahren nach Anspruch 1, **dadurch gekennzeichnet, daß** als Lösemittelgemisch 20 bis 80 Gewichtsteile Suspensionsmittel, 20 bis 80 Gewichtsteile Methanol und 0 bis 10 Gewichtsteile Wasser eingesetzt werden.

## Claims

1. A process for preparing water-soluble cellulose ethers which contain hydroxyalkyl groups, wherein cellulose is etherified with alkylene oxide in a water-containing organic suspension medium in the presence of at least 1.0 mol of sodium hydroxide per mole of anhydroglucose units, the water-containing organic suspension medium is separated off after the etherification reaction is complete, the crude cellulose ether is extracted with a suitable solvent mixture, the lower-boiling organic components are distilled off from the solvent mixture after the extraction, the water-containing organic suspension medium separated off is added to the distillation residue of the solvent mixture to form a multiphase mixture, the bottom phase of the multiphase mixture is separated and the sodium hydroxide present in the bottom phase is reused.

2. The process as claimed in claim 1, wherein the bottom phase of the multiphase mixture is employed in the preparation of cellulose ethers which contain hydroxyalkyl groups.

3. The process as claimed in claim 1, wherein the distillate of the solvent mixture is employed as a solvent mixture for extracting the crude cellulose ether.

4. The process as claimed in claim 1, wherein the weight ratio of the suspension medium employed to cellulose is from 3:1 to 20:1.

5. The process as claimed in claim 1, wherein the water-containing organic suspension medium contains monohydric alcohols having from 2 to 4 carbon atoms.

6. The process as claimed in claim 1, wherein at least one component of the solvent mixture employed for the extraction is also a constituent of the suspension medium.

7. The process as claimed in claim 1, wherein the solvent mixture employed comprises from 20 to 80 parts by weight of suspension medium, from 20 to 80 parts by weight of methanol and from 0 to 10 parts by weight of water.

## Revendications

1. Procédé pour la préparation d'éthers de cellulose contenant des groupes hydroxyalkyle hydrosolubles, **caractérisé en ce qu'**on éthérifie de la pâte de cellulose avec de l'oxyde d'alkylène dans un milieu de suspension organique contenant de l'eau en présence d'au moins 1,0 mol d'hydroxyde de sodium par mole de motif d'anhydroglucose, **en ce qu'**on sépare le milieu de suspension organique, contenant de l'eau après la fin de la réaction d'éthérification, on extrait l'éther de cellulose brut avec un mélange de solvants approprié, on distille du mélange de solvants après l'extraction les constituants organiques à bas point d'ébullition, on ajoute le milieu de suspension organique contenant de l'eau séparé au résidu de distillation du mélange de solvants en formant un mélange polyphasique, la phase inférieure du mélange polyphasique est séparée et l'hydroxyde de sodium contenu dans la phase inférieure est utilisé de nouveau.

2. Procédé selon la revendication 1, **caractérisé en ce qu'**on utilise la phase inférieure du mélange polyphasique pour la préparation d'éthers de cellulose contenant des groupes hydroxyalkyle.

3. Procédé selon la revendication 1, **caractérisé en ce qu'**on utilise le distillat du mélange de solvants comme mélange de solvants pour l'extraction de l'éther de cellulose brut.

4. Procédé selon la revendication 1, **caractérisé en ce que** le rapport en poids du milieu de suspension mis en oeuvre par rapport à la pâte de cellulose s'élève à entre 3/1 et 20/1.

5. Procédé selon la revendication 1, **caractérisé en ce que** l'agent de suspension organique contenant de l'eau contient des alcools monohydroxylés ayant de 2 à 4 atomes de carbone.

6. Procédé selon la revendication 1, **caractérisé en ce qu'**au moins un composant du mélange de solvants mis en oeuvre pour l'extraction est aussi un constituant du milieu de suspension.

7. Procédé selon la revendication 1, **caractérisé en ce qu'**on utilise comme mélange de solvants de 20 à 80 parties en poids du milieu de suspension, de 20 à 80 parties en poids de méthanol et de 0 à 10 parties en poids d'eau.
